# DEMANDE DE BREVET EUROPEEN

(11) **EP 3 637 871 A1**
(43) Date de publication de la demande: **15.04.2020**
(21) Numéro de dépôt: 19306295.7
(22) Date de dépôt: 07.10.2019
(51) Int. Cl.: H04W 52/02

(54) **CARTE D'IDENTIFICATION D'ABONNÉ POUR UN TERMINAL MOBILE**

(30) Priorité: 08.10.2018 FR 1859294
(71) Demandeur: Bouygues Telecom, 75116 Paris (FR)
(72) Inventeur: ASSOUSSI, Alae, 95130 Franconville (FR); LEHOUX, Fabrice, 91300 Massy (FR)
(74) Mandataire: Regimbeau

(57) **Abrégé**

La présente invention concerne une carte d'identification d'abonné (3) pour un terminal mobile (2) destiné à un usage prédéterminé, la carte d'identification d'abonné (3) comprenant une unité de traitement de donnée mettant en œuvre une application de type SIM/USIM et une unité de stockage de données, la carte d'identification d'abonné (3) étant caractérisée en ce qu'elle configurée de sorte à désactiver au moins un service SIM/USIM de ladite application de type SIM/USIM inutile pour la mise en œuvre dudit usage prédéterminé.

## Description

### DOMAINE TECHNIQUE GENERAL

La présente invention concerne le domaine des cartes d'identification d'abonné, dites cartes SIM, pour connexion à un réseau de communication mobile.

### ETAT DE L'ART

Le M2M (« Machine to Machine ») est une branche en pleine expansion des télécoms visant à permettre l'interaction autonome entre « objets communicants », c'est-à-dire dispositifs (tels que des compteurs électriques, des containeurs de fluide, des périphériques domotiques, etc.) équipés de moyens de communication réseau et interagissant sans intervention humaine.

Cette technologie fonctionne en utilisant des réseaux de communication mobile tels que le réseau GSM et ses dérivés (GPRS, UMTS, LTE, etc.).

Un des défis du M2M est la limitation de consommation énergétique. En effet, il est souhaitable d'avoir des objets communicants rechargés le moins souvent possible, voire jamais : si ces derniers se contentent de faire remonter des données à une fréquence faible, on peut envisager une batterie avec une durée de vie de plusieurs années équivalente à celle de l'objet en lui-même. Prévoir un système non-rechargeable diminue en effet sensiblement son coût.

Une partie conséquente de la consommation de l'objet connecté est due au fonctionnement de la carte d'indentification d'abonné, i.e. l'élément sécurisé contenant l'identifiant et les données de connexion de l'abonné M2M au réseau de communication mobile, couramment appelée carte SIM. Lors du démarrage d'un module GSM M2M, un échange est réalisé entre ce dernier et la carte SIM. Cet échange permet au module GSM M2M de récupérer diverses informations nécessaires pour la connexion à un réseau opérateur et l'utilisation des services associés (Voix, Data, SMS, GSMData, etc.).

Ce fonctionnement ne peut pas être modifié dans la mesure où il est aujourd'hui complètement défini par les spécifications techniques émises par les organismes de standardisation partenaires du 3GPP (notamment l'ETSI) qu'on désignera dans la présente description comme « standard 3GPP ».

Il a par conséquent été proposé pour limiter la consommation d'éteindre la carte SIM lorsqu'elle n'est pas utilisée, et la relancer si besoin. En particulier, la demande US2013039241 propose de sauvegarder le contenu de la SIM dans une mémoire cache de l'objet connecté avant de la suspendre, et restaurer ce contenu ultérieurement à la prochaine relance de la SIM.

Cependant, la détection de présence de la SIM (dite « presence detection pooling ») est obligatoire pour pouvoir réaliser un appel voix ou pour communiquer en data. Ainsi, cette solution n'est pas utilisable pour des applications nécessitant un échange actif avec le réseau : il faudrait suspendre et rallumer la SIM en permanence, ce qui in fine entrainerait une hausse de la consommation plutôt qu'une baisse.

De plus, chaque suspension/rallumage prend un certain temps du fait du transfert des fichiers de données.

Il serait ainsi souhaitable de disposer d'une solution permettant de baisser encore la consommation des cartes SIM pour les applications M2M tout en ayant une meilleure expérience utilisateur.

### PRESENTATION DE L'INVENTION

La présente invention se rapporte ainsi à une carte d'identification d'abonné pour un terminal mobile destiné à un usage prédéterminé, la carte d'identification d'abonné comprenant une unité de traitement de donnée mettant en œuvre une application de type SIM/USIM et une unité de stockage de données, la carte d'identification d'abonné étant caractérisée en ce qu'elle configurée de sorte à désactiver au moins un service SIM/USIM de ladite application de type SIM/USIM inutile pour la mise en œuvre dudit usage prédéterminé.

Selon d'autres caractéristiques avantageuses et non limitatives du premier aspect de l'invention :
- la carte d'identification d'abonné est configurée de sorte à désactiver chaque service SIM/USIM inutile pour la mise en œuvre dudit usage prédéterminé ;
- la carte d'identification d'abonné comprend dans l'unité de stockage de données au moins un fichier EF-SST de services SIM activés et/ou un fichier EF-UST de services USIM activés, chaque service SIM/USIM désactivé étant indiqué comme indisponible dans ledit fichier EF-SST/EF-UST ;
- l'application est de type USIM, chaque service listé dans le fichier EF-SST est désactivé, et seuls les services n°27, n°33 et n°38 listés dans le fichier EF-UST ne sont pas désactivés ;
- au moins un fichier dont le stockage sur l'unité de stockage de données de la carte d'identification d'abonné est requis par l'application SIM/USIM, présente une taille réduite ;
- au moins un fichier dont le stockage sur l'unité de stockage de données de la carte d'identification d'abonné est requis par l'application de type SIM/USIM, est supprimé ;
- ledit fichier présentant une taille réduite ou supprimé est requis pour un service SIM/USIM désactivé et/ou est inutile pour la mise en œuvre dudit usage prédéterminé ;
- chaque fichier inutile pour la mise en œuvre dudit usage prédéterminé est supprimé ;
- Soit l'application est de type SIM et sont gardés les seuls fichiers suivants :
   ∘ Dans un répertoire MF : EF-ICCID ;
   ∘ Dans un répertoire DF-GSM : EF-IMSI, EF-Kc, EF-HPPLMN, EF-SST, EF-KcGPRS, EF-LOCIGPRS, EF-BCCH, EF-ACC, EF-FPLMN, EF-LOCI, EF-AD, EF-PHASE;
   ∘ Dans un répertoire DF-GSM-ACCESS : EF-Kc et EF-KcGPRS ;
- Soit l'application est de type USIM et sont gardés les seuls fichiers suivants :
   ∘ Dans un répertoire MF : EF-DIR, EF-ARR, EF-ICCID ;
   ∘ Dans un répertoire DF-TELECOM : EF-ARR ;
   ∘ Dans un répertoire ADF-USIM : EF-ARR, EF-IMSI, EF-Keys, EF-KeysPS, EF-HPPLMN, EF-UST, EF-START-HFN, EF-THRESHOLD, EF-LOCI, EF-PSLOCI, EF-ACC, EF-FPLMN, EF-AD, EF-NETPAR;
   ∘ Dans un répertoire DF-GSM-ACCESS : EF-Kc et EF-KcGPRS ;
- La carte d'identification d'abonné est de type Universal Integrated Circuit Card, UICC ;
- ladite application de type SIM/USIM est soit l'application SIM telle que définie par la spécification ETSI TS 102.221, soit l'application USIM telle que définie par la spécification 3GPP TS 31.102.
- ledit usage prédéterminé est un usage Machine-To-Machine limité à l'échange de paquets de données.

Selon un deuxième aspect, l'invention concerne un ensemble d'un terminal mobile destiné à un usage prédéterminé et d'une carte d'identification d'abonné pour le terminal mobile selon le premier aspect.

Selon un troisième aspect, l'invention concerne un procédé de préparation d'une carte d'identification d'abonné pour un terminal mobile destiné à un usage prédéterminé, la carte d'identification d'abonné comprenant une unité de traitement de donnée mettant en œuvre une application de type SIM/USIM et une unité de stockage de données, le procédé étant caractérisé en ce qu'il comprend la désactivation d'au moins un service SIM/USIM de ladite application de type SIM/USIM inutile pour la mise en œuvre dudit usage prédéterminé.

Selon d'autres caractéristiques avantageuses et non limitatives du procédé selon l'invention :
- le procédé comprend en outre la limitation ou de la taille ou la suppression d'au moins un fichier dont le stockage sur l'unité de stockage de données de la carte d'identification d'abonné est requis par ladite application de type SIM/USIM.

### PRESENTATION DES FIGURES

D'autres caractéristiques et avantages de la présente invention apparaîtront à la lecture de la description qui va suivre d'un mode de réalisation préférentiel. Cette description sera donnée en référence à l'unique figure indexée représentant un schéma d'une architecture de réseau pour la mise en œuvre du procédé selon l'invention.

### DESCRIPTION DETAILLEE

### Carte SIM

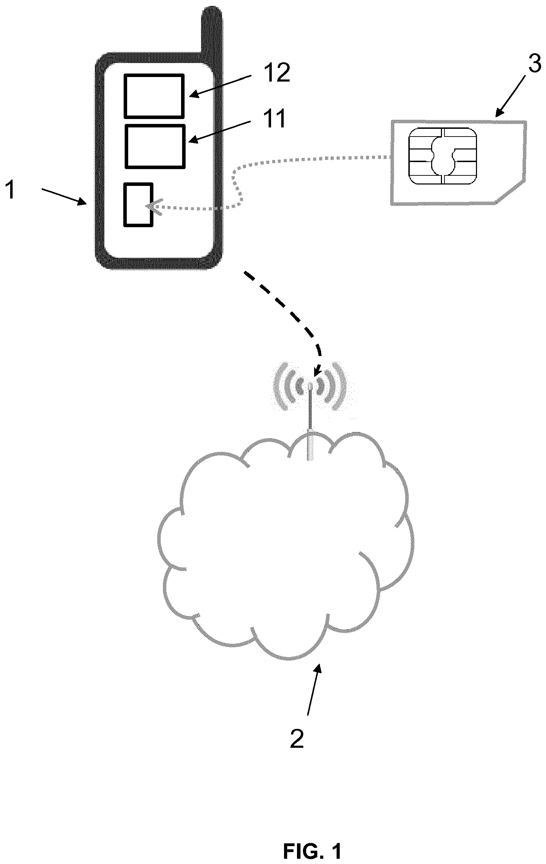

En référence à la figure 1, la présente invention concerne une carte d'identification d'abonnée 3 d'un opérateur d'un réseau de communication mobile 2 (typiquement un réseau de téléphonie mobile de type 2G (GSM, GPRS), 3G (UMTS) ou 4G (LTE)), pour un terminal mobile 1. Le terminal mobile 1 peut être ici tout objet connecté nécessitant une connexion au réseau de communication mobile 2 et pourvu d'un module de traitement de données 11 pour la mise en œ uvre d'application et d'un modem 12 pour communiquer avec la carte d'identification d'abonné 3.

Par « carte d'identification d'abonné », on comprendra tout unité de traitement sécurisée capable d'assurer les fonctions d'identification d'un abonné via des données qui y sont stockées, et tout particulièrement une carte SIM.

Une carte SIM (« Subscriber Identity Module ») est une puce de type UICC (« Universal Integrated Circuit Card »), souvent appelée « smart-card », comprenant des moyens de traitement de données (sous la forme d'un microcontrôleur) et de la mémoire (de type EEPROM (« Electrically-Erasable Programmable Read-Only Memory ») ou flash, généralement d'une taille de 64Ko, bien que des modèles de 128 ou 256Ko sont disponibles). La puce UICC, généralement sous un format « mini-SIM », ou quelque fois « micro-SIM » voire « nano-SIM », est glissée dans un logement assurant les fonctions de lecteur de la puce.

Dans la suite de la présente description, on prendra l'exemple d'une carte SIM, mais on comprendra que le terme « d'identification d'abonné » ne doit pas être réduit aux cartes SIM mais peut concerner tous les supports actuels et à venir d'identification de l'abonné, quelle que soit leur technologie, c'est-à-dire pas forcément des puces de type UICC. On notera d'ailleurs qu'il est courant pour les objets communicants que cette puce ne présente pas le format « classique » d'une carte SIM mais soit directement soudée sur la carte mère (format « e-UICC » pour « (embedded)-Universal Integrated Circuit Card »), voire complètement virtualisée. En outre, à titre d'exemple, on citera des solutions alternatives utilisant des cartes microSD (« Secure Digital ») qui comprennent également des moyens de traitement de données et un espace de stockage.

La carte d'identification d'abonné 3 permet de stocker les informations spécifiques à l'abonné du réseau de communication mobile 2, ainsi qu'éventuellement des données et des applications de l'utilisateur (par exemple son répertoire).

Parmi les données essentielles (dont l'organisation est régie par le standard 3GPP), on trouve des fichiers dits élémentaires (EF, « Elementary Files »), de diverses natures, par exemple des listes de réseaux PLMN (« Public Land Mobile Network ») entre lesquels du roaming peut s'effectuer. Ces fichiers EF seront discutés plus loin.

### Principe de l'invention

La présente invention permet d'optimiser les échanges entre le modem 12 et la carte 3 en modifiant le contenu de la mémoire de cette dernière, ceci afin de réduire le temps nécessaire pour la procédure du prétraitement.

En conséquence, le terminal 1 améliorera son temps d'accroche au réseau mobile et réduira considérablement sa consommation énergétique.

L'idée est de désactiver certain services mis en œuvre par la carte 3, dits services SIM et/ou USIM, non-nécessaires au fonctionnement M2M (plus précisément à l'usage souhaité), de sorte à éviter les tentatives de lecture de fichiers liés aux services désactivés.

USIM signifie « Universal SIM ». Par abus de langage on confond souvent la SIM « physique » de « l'application » SIM qui est mise en œuvre par cette dernière. L'application USIM désigne une version améliorée de l'application SIM, dédiée à la téléphonie 3G, et très souvent mise en œuvre sur une carte 3 de type UICC plus récente et est donc associée à quelques fonctionnalités améliorées telles qu'un stockage plus important de contacts, une meilleure gestion de l'identité du client, un nouvel algorithme d'authentification « EAP-SIM ». On comprend que les applications SIM/USIM seront mises en œuvre systématiquement et de façon rigoureusement identique quel que soit le format de la carte d'identification d'abonné 3.

L'application USIM se distingue principalement de l'application SIM en ce qu'elle met en œuvre un ensemble d'évolutions permettant de prendre en compte les nouveautés des réseaux 3G et 4G spécifiés par le 3GPP (l'application SIM est limitée à la 2G).

Dans la présente demande, on parlera d'application de « type » SIM/USIM, c'est-à-dire les applications SIM/USIM actuelles telles que définies par le standard 3GPP (voir plus loin), mais également celles similaires qui pourront être définies dans de futures versions des standards 3GPP (par exemple pour la 5G), et de façon générale toutes les applications conçues pour permettre l'authentification de l'abonné déployées et exécutées par une carte d'indentification d'abonné.

Les applications de type SIM/USIM permettent respectivement la mise en œ uvre de services respectivement SIM/USIM correspondant aux fonctionnalités apportées. Chaque service utilise un ou plusieurs des fichiers EF stockés dans la carte d'identification d'abonné 3.

L'application SIM et ses services sont définis dans la spécification ETSI TS 102.221 (l'ETSI faisant partie du 3GPP), et similairement l'application USIM et ses services sont définis dans la spécification 3GPP TS 31.102.

En particulier, la carte d'identification abonné 3 comprend dans l'unité de stockage de données au moins un fichier EF dit « Service Table », en l'espèce un fichier EF-SST (« SIM service table ») pour une application SIM, et le cas échéant un fichier EF-UST (« USIM service table ») pour une application USIM. Ces fichiers listent en effet les services activés. A noter qu'il existe également un fichier de paramétrage de services lié à l'EF-UST dit EF-EST (« Enabled service table »). Ce fichier, qui liste des « sous-servies » est activé/désactivé par un service dans l'EF-UST (service n°34, voir plus loin).

Comme expliqué, les services USIM sont une extension des services SIM pour le passage à la 3G, ils comprennent donc tous les services SIM (i.e. l'application USIM utilise le fichier EF-SST).

Dans la suite de la présente description, on parlera de services SIM ou USIM de façon indifférenciée, et on comprendra que soit la carte d'identification d'abonné 3 se limite à un réseau 2G et on comprendra qu'il s'agit de services SIM, soit la carte d'identification d'abonné 3 est compatible avec des réseaux 3G et plus et il s'agit alors de services USIM.

En particulier, voici la liste exhaustive des services SIM tel que définie dans le fichier EF-SST :
Service n°1 : CHV1 disable function
Service n°2 : Abbreviated Dialling Numbers (ADN)
Service n°3 : Fixed Dialling Numbers (FDN)
Service n°4 : Short Message Storage (SMS)
Service n°5 : Advice of Charge (AoC)
Service n°6 : Capability Configuration Parameters (CCP)
Service n°7 : PLMN selector
Service n°8 : RFU
Service n°9 : MSISDN
Service n°10 : Extension1
Service n°11 : Extension2
Service n°12 : SMS Parameters
Service n°13 : Last Number Dialled (LND)
Service n°14 : Cell Broadcast Message Identifier
Service n°15 : Group Identifier Level 1
Service n°16 : Group Identifier Level 2
Service n°17 : Service Provider Name
Service n°18 : Service Dialling Numbers (SDN)
Service n°19 : Extension3
Service n°20 : RFU
Service n°21 : VCGS Group Identifier List (EF-VGCS and EF-VGCSS)
Service n°22 : VBS Group Identifier List (EF-VBS and EF-VBSS)
Service n°23 : enhanced Multi-Level Precedence and Pre-emption Service
Service n°24 : Automatic Answer for eMLPP
Service n°25 : Data download via SMS-CB
Service n°26 : Data download via SMS-PP
Service n°27 : Menu selection
Service n°28 : Call control
Service n°29 : Proactive SIM
Service n°30 : Cell Broadcast Message Identifier Ranges
Service n°31 : BDN
Service n°32 : Extension 4
Service n°33 : De-perso Control keys
Service n°34 : Co-operative Network List
Service n°35 : SMSR
Service n°36 : Network's Indication of Alerting (NIA)
Service n°37 : SMS-MO Control
Service n°38 : GPRS
Service n°39 : Image (IMG)
Service n°40 : Support of Localised Service Areas (SoLSA)
Service n°41 : USSD Control
Service n°42 : RUN AT Command
Service n°43 : User control PLMN selector
Service n°44 : Operator control PLMN selector
Service n°45 : HPLMN selector with Access Techn.
Service n°46 : CPBCCH info.
Service n°47 : Investigation scan
Service n°48 : Ext. CCP
Service n°49 : MExE
Service n°50 : RPLMN last used Access Technology
Service n°51 : PLMN Network Name
Service n°52 : Operator PLMN List
Service n°53 : Mailbox Dialling Numbers
Service n°54 : Message Waiting Indication Status
Service n°55 : Call Forwarding Indication Status
Service n°56 : Service Provider Display Information
Service n°57 : Multimedia Messaging Service (MMS)
Service n°58 : Extension 8
Service n°59 : MMS User Connectivity Parameters
Service n°60 : RFU

Et voici la liste exhaustive des services USIM tel que définie dans le fichier EF-UST :
Service n°1 : Local Phone Book
Service n°2 : Fixed Dialling Numbers (FDN)
Service n°3 : Extension 2
Service n°4 : Service Dialling Numbers (SDN)
Service n°5 : Extension3
Service n°6 : Barred Dialling Numbers (BDN)
Service n°7 : Extension4
Service n°8 : Outgoing Call Information (OCI and OCT)
Service n°9 : Incoming Call Information (ICI and ICT)
Service n°10 : Short Message Storage (SMS)
Service n°11 : Short Message Status Reports (SMSR)
Service n°12 : Short Message Service Parameters (SMSP)
Service n°13 : Advice of Charge (AoC)
Service n°14 : Capability Configuration Parameters 2 (CCP2)
Service n°15 : Cell Broadcast Message Identifier
Service n°16 : Cell Broadcast Message Identifier Ranges
Service n°17 : Group Identifier Level 1
Service n°18 : Group Identifier Level 2
Service n°19 : Service Provider Name
Service n°20 : User controlled PLMN selector with Access Technology
Service n°21 : MSISDN
Service n°22 : Image (IMG)
Service n°23 : Support of Localised Service Areas (SoLSA)
Service n°24 : Enhanced Multi Level Precedence and Pre emption Service
Service n°25 : Automatic Answer for eMLPP
Service n°26 : RFU
Service n°27 : GSM Access
Service n°28 : Data download via SMS-PP
Service n°29 : Data download via SMS CB
Service n°30 : Call Control by USIM
Service n°31 : MO-SMS Control by USIM
Service n°32 : RUN AT COMMAND command
Service n°33 : (Packed Switched Domain) shall be set to '1'
Service n°34 : Enabled Services Table
Service n°35 : APN Control List (ACL)
Service n°36 : Depersonalisation Control Keys
Service n°37 : Co-operative Network List
Service n°38 : GSM security context
Service n°39 : CPBCCH Information
Service n°40 : Investigation Scan
Service n°41 : MexE
Service n°42 : Operator controlled PLMN selector with Access Technology
Service n°43 : HPLMN selector with Access Technology
Service n°44 : Extension 5
Service n°45 : PLMN Network Name
Service n°46 : Operator PLMN List
Service n°47 : Mailbox Dialling Numbers
Service n°48 : Message Waiting Indication Status
Service n°49 : Call Forwarding Indication Status
Service n°50 : Reserved and shall be ignored
Service n°51 : Service Provider Display Information
Service n°52 Multimedia Messaging Service (MMS)
Service n°53 : Extension 8
Service n°54 : Call control on GPRS by USIM
Service n°55 : MMS User Connectivity Parameters
Service n°56 : Network's indication of alerting in the MS (NIA)
Service n°57 : VGCS Group Identifier List (EFVGCS and EFVGCSS)
Service n°58 : VBS Group Identifier List (EFVBS and EFVBSS)
Service n°59 : Pseudonym
Service n°60 : User Controlled PLMN selector for I-WLAN access
Service n°61 : Operator Controlled PLMN selector for I-WLAN access
Service n°62 : User controlled WSID list
Service n°63 : Operator controlled WSID list
Service n°64 : VGCS security
Service n°65 : VBS security
Service n°66 : WLAN Reauthentication Identity
Service n°67 : Multimedia Messages Storage
Service n°68 : Generic Bootstrapping Architecture (GBA)
Service n°69 : MBMS security
Service n°70 : Data download via USSD and USSD application mode
Service n°71 : Equivalent HPLMN
Service n°72 : Additional TERMINAL PROFILE after UICC activation
Service n°73 : Equivalent HPLMN Presentation Indication
Service n°74 : Last RPLMN Selection Indication
Service n°75 : OMA BCAST Smart Card Profile
Service n°76 : GBA-based Local Key Establishment Mechanism
Service n°77 : Terminal Applications
Service n°78 : Service Provider Name Icon
Service n°79 : PLMN Network Name Icon
Service n°80 : Connectivity Parameters for USIM IP connections
Service n°81 : Home I-WLAN Specific Identifier List
Service n°82 : I-WLAN Equivalent HPLMN Presentation Indication
Service n°83 : I-WLAN HPLMN Priority Indication
Service n°84 : I-WLAN Last Registered PLMN
Service n°85 : EPS Mobility Management Information
Service n°86 : Allowed CSG Lists and corresponding indications
Service n°87 : Call control on EPS PDN connection by USIM
Service n°88 : HPLMN Direct Access
Service n°89 : eCall Data
Service n°90 : Operator CSG Lists and corresponding indications
Service n°91 : Support for SM-over-IP
Service n°92 : Support of CSG Display Control
Service n°93 : Communication Control for IMS by USIM
Service n°94 : Extended Terminal Applications
Service n°95 : Support of UICC access to IMS
Service n°96 : Non-Access Stratum configuration by USIM
Service n°97 : PWS configuration by USIM
Service n°98 : RFU
Service n°99 : URI support by UICC
Service n°100 : Extended EARFCN support
Service n°101 : ProSe
Service n°102 : USAT Application Pairing
Service n°103 : Media Type support
Service n°104 : IMS call disconnection cause
Service n°105 : URI support for MO SHORT MESSAGE CONTROL
Service n°106 : ePDG configuration Information support
Service n°107 : ePDG configuration Information configured
Service n°108 : ACDC support
Service n°109 : MCPTT
Service n°110 : ePDG configuration Information for Emergency Service support
Service n°111 : ePDG configuration Information for Emergency Service configured
Service n°112 : ePDG configuration Information for Emergency Service configured

Comme expliqué, la présente invention propose de désactiver certains services SIM/USIM mis en œuvre par la carte 3 qui sont inutiles pour l'usage souhaité, i.e. en particulier non-nécessaires au fonctionnement M2M.

Par exemple, on trouve les services SIM/USIM suivants qui pourraient être désactivés selon l'usage :
- « Abbreviated Dialling Numbers » (Service n°2 de l'EF-SST), qui permet de gérer un répertoire de contacts ;
- "Fixed Dialling Numbers" (Service n°3 de l'EF-SST/Service n°2 de l'EF-UST), qui permet de limiter les appels possibles vers une liste prédéterminée ;
- "Short Message Storage" (Service n°4 de l'EF-SST/Service n°10 de l'EF-UST), qui permet de stocker des messages SMS sur la carte SIM ;
- « CHV1/2 disable function » (Service n°1 de l'EF-SST), qui permet de gérer l'activation ou la désactivation d'un premier ou un deuxième PIN (CHV signifie « Card Holder Vérification »).

Il est important de comprendre que de façon paradoxale cette optimisation se fait en toute transparence vis-à-vis du standard 3GPP. Ainsi, le réseau de communication mobile 3 reste utilisable dans ces conditions par le terminal 1.

Plus précisément, bien que l'existence de ces services soit prévue et même rendue obligatoire par le standard 3GPP, leur désactivation ne pose pas de problème tant que l'on n'essaie pas d'utiliser les fonctions correspondantes. Ce principe peut ainsi varier en fonction des besoins de services opérateurs que le terminal 1 demandera. Plus précisément, on prédétermine l'usage souhaité du terminal 1, et on désactive au moins un voire tous les services inutiles pour cet usage. Pour reformuler, on ne peut garder actifs que les services nécessaires pour ledit usage prédéterminé.

Par exemple, un objet connecté simple n'utilisant pas les SMS n'aura pas le moindre problème à avoir le service « Short Message Storage » désactivé, et ne saura d'ailleurs même pas que ce service est désactivé.

La modification de la carte 3 est ainsi dite agnostique, c'est-à-dire telle que le terminal 1 ne peut pas faire la différence entre une carte 3 « normale » et une carte 3 conforme au présent procédé s'il reste dans ledit usage prédéterminé.

Par « usage prédéterminé », en entend l'ensemble des actions que le terminal est sensé pouvoir faire. En particulier, en fonctionnement M2M le terminal 1 peut se contenter de l'usage « envoi de données (data) » sans voix ou SMS. On définit ainsi un usage M2M préféré dit « minimal » dans lequel il suffit que le terminal 1 soit capable d'échanger des paquets de données (service data). On peut également envisager des usages autres que M2M et par exemple un usage « humain » minimal dans lequel il suffit que le terminal 1 soit capable de téléphoner (service voix), échanger des messages textes (service SMS) et échanger des paquets de données (service data), ce qui peut être intéressant si l'abonné souhaite un fonctionnement ultra-robuste et d'une consommation minimale.

Dans tous les cas ledit usage doit être choisi en amont, et la carte 3 configurée en conséquence (plus précisément, l'utilisateur choisira une carte 3 présentant la configuration optimisée pour l'usage qu'il souhaite). Il est important que le terminal 1 respecte l'usage prédéterminé.

De façon préférée, et dans une optique de réduction maximale de la consommation, l'usage est comme expliqué M2M minimal (c'est-à-dire le strict minimum pour que le terminal 1 puisse se connecter au réseau de communication mobile 2 et soit capable d'échanger des données), et sont désactivés tous les services SIM/USIM non-essentiels, i.e. ne sont gardés que les services essentiels à ce fonctionnement basique.

Pour mettre en œuvre cette désactivation de service, sont avantageusement altérés le ou lesdits fichier EF Service Table (EF-SST, EF-UST, EF-EST). En particulier, un bit de disponibilité est mis à 0 dans le fichier pour chacun des services à désactiver.

De façon particulièrement préférée, dans ledit usage M2M minimal :
- Chacun des services de l'EF-SST est désactivé ;
- Seuls les services n°27 (GSM access), n°33 (Packet Switched Domain) et n°38 (GSM security context) de l'EF-UST sont conservés activés (tous les autres sont désactivés) ;
- Chacun des services de l'EF-EST est désactivé (à noter que l'EF-EST ne sera même pas prise en considération dès lors que le service n°34 de l'EF-UST est désactivé).

A noter que la présente invention n'est pas restreinte à un usage M2M minimal (limité à l'échange de paquets de données), l'usage pourra par exemple être un usage SMS limité à l'envoi de SMS, un usage voix limité à des communications téléphonique, etc. L'homme du métier saura désactiver tous les services SIM/USIM non-essentiels en conséquence.

### Suppression de fichiers

Selon un mode de réalisation préféré, en outre au moins un fichier de données présente une taille réduite, voire est complètement supprimé. Avantageusement, il s'agit d'un fichier lié à la mise en œuvre d'un service désactivé, en particulier tous les fichiers liés à ce service désactivé

La réduction de la taille d'un fichier EF permet de réduire le temps nécessaire à lire ce fichier en entier par le modem 12. Par exemple on peut typiquement réduire la taille du fichier EF-ADN (« Abbreviated Dialling Numbers »), qui héberge le répertoire de contacts. Ce fichier est inutile si l'on a désactivé le service du même nom, et même si on ne l'a pas désactivé il n'est pas forcément utile de l'avoir en entier.

La suppression d'un fichier EF est encore plus radicale, mais possible. En effet, bien que la présence des fichiers EF définis par la norme est obligatoire, leur absence ne pose aucun problème si le service correspondant est désactivé : ils ne seront jamais lus, et si d'une certaine façon leur absence viole le standard 3GPP cela n'aura jamais de conséquence. Plus précisément, si jamais la présente carte 3 était insérée dans un terminal « complet » tel qu'un smartphone, bien sur certains problèmes se poseraient, mais dans la mesure où seule une partie des fonctionnalités proposées par la standard 3GPP ne sera utilisée par le présent terminal 1 (celles correspondant à l'usage prédéterminé), cela n'aura aucune conséquence, et le modem 12 du terminal 1 ne remarquera même pas l'absence du fichier. On évite ainsi la lecture de ces fichiers et on obtient juste un démarrage plus rapide et une consommation moindre sans autre incidence.

Il est même possible de supprimer en plus des fichiers qui ne sont pourtant pas liés à la mise en œuvre d'un service désactivé, mais qui restent inutiles pour ledit usage prédéterminé.

Par exemple le fichier EF-ECC (« Emergency Call Codes ») permet de renseigner un numéro d'urgence qui sera composé par le terminal 1 sur demande de l'utilisateur (par exemple le 112). Il est obligatoire mais non pertinent pour l'usage M2M, a fortiori si ledit usage déterminé du terminal 1 n'inclut pas la voix. Il peut donc être supprimé sans risque.

De façon préféré, à nouveau l'usage est M2M minimal (c'est-à-dire le strict minimum pour que le terminal 1 puisse se connecter au réseau de communication mobile 2 et échanger des paquets de données), et sont supprimés tous les fichiers de données non-essentiels, i.e. ne sont gardés que les fichiers essentiels à ce fonctionnement basique.

Il s'agit en pratique des fichiers liés au rôle fondamental de la carte 3 vis-à-vis de l'opérateur du réseau de communication mobile 2, tels que les fichiers EF-IMSI ou EF-Kc.

De façon particulièrement préférée :
- Si l'application mise en œuvre par la carte 3 est une application SIM (fonctionnement en 2G - services SIM), sont gardés les seuls fichiers suivants (on passe de 38 à 15 fichiers) :
   ∘ Dans le répertoire MF [« Master-File box », i.e. la racine de l'unité de stockage de données de la carte 3] : EF-ICCID (« Integrated Circuit Card Identification », identifiant unique de l'UICC) ;
   ∘ Dans le répertoire DF-TELECOM [« Dedicated-File box » dans le répertoire MF] : rien (i.e. tous les fichiers EF peuvent être supprimés) ;
   ∘ Dans le repertoire DF-GSM [également dans le répertoire MF] : EF-IMSI (« International Mobile Subscriber Identity »), EF-Kc, EF-KcGPRS (GSM/GPRS « Ciphering Key »), EF-HPPLMN (« Higher Priority PLMN » search period), EF-SST (la table des services SIM comme expliqué), EF-LOCI, EF-LOCIGPRS (GSM/GPRS « LOCation Information », contiennent entre autre le TMSI), EF-BCCH (« Broadcast Control Channels »), EF-ACC (« Access Control Class »), EF-FPLMN (« Forbidden PLMN »), EF-AD (« Administrative Data »), EF-PHASE (contient au moins une adresse « Proxy Call Session Control Function »);
   ∘ Dans le répertoire DF-GSM-ACCESS [également dans le répertoire MF] : EF-Kc et EF-KcGPRS.
- Si l'application mise en œuvre par la carte 3 est une application USIM (fonctionnement en 3G et plus - services USIM) sont gardés les seuls fichiers suivants (on passe de 56 à 20 fichiers) :
   ∘ Dans le répertoire MF : EF-DIR (« Application DIRectory »), EF-ARR (« Access Rule Reference »), EF-ICCID ;
   ∘ Dans le répertoire DF-TELECOM [également dans le répertoire MF] : EF-ARR ;
   ∘ Dans le répertoire DF-PHONEBOOK [dans le répertoire DF-TELECOM] : rien (i.e. tous les fichiers EF peuvent être supprimés) ;
   ∘ Dans le répertoire ADF-USIM [« Application-Dedicated-File box » également dans le répertoire MF] : EF-ARR, EF-IMSI, EF-Keys (« Ciphering and Integrity Keys »), EF-KeysPS (« Ciphering and Integrity Keys for Packet Switched domain »), EF-HPPLMN, EF-UST (la table des services SIM comme expliqué), EF-START-HFN (valeurs d'initialisation d' « HyperFrame Number »), EF-THRESHOLD, EF-LOCI, EF-PSLOCI (« Packet Switched » LOCI), EF-ACC, EF-FPLMN, EF-AD, EF-NETPAR (« NETwork PARameters »);
   ∘ Dans le répertoire DF-GSM-ACCESS : EF-Kc et EF-KcGPRS.

Les éventuels autres répertoires peuvent être intégralement supprimés.

Enfin, certaines « applets » SIM, i.e. d'autres programmes autre que l'application (principale) SIM/USIM (typiquement des applets conformes au standard STK « Sim Tool Kit ») peuvent être supprimés pour réduire le nombre d'événements suivis par la carte 3 et ainsi économiser encore davantage la consommation énergétique liée à ces taches récurrentes.

Les applets SIM font ainsi par exemple appel à des événements liés au modem 12, tel que le statut (horloge). Le statut consiste à ce que le modem 12 envoie un événement à une périodicité donnée pour réveiller l'applet.

De plus, les applets interagissent souvent avec les fichiers dans la carte 3 pour exécuter des actions diverses et variées. Par conséquent, à chaque modification d'un fichier, les applets provoquent un redémarrage du modem 12 pour que ce dernier prenne en compte la dernière modification apportée aux fichiers, d'où une consommation énergétique supplémentaire qu'il est souhaitable de supprimer.

### Terminal

Selon un deuxième aspect de l'invention, est proposé l'ensemble d'un terminal 1 (destiné à un usage particulier) et de la carte d'identification d'abonné 3 selon le premier aspect de l'invention.

Le terminal 1 n'a pas besoin de subir la moindre modification, et utilise la carte 3 de façon normale, sans faire la différence avec une carte d'identification d'abonné 3 traditionnelle, i.e. comprenant une unité de traitement de donnée mettant en œuvre une application de type SIM/USIM « normale » et une unité de stockage de données.

Par « normale » on entend que l'application de type SIM/USIM respecte pleinement le standard 3GPP, et présente les services SIM/USIM nominaux, ainsi qu'au moins tous les fichiers EF définis comme obligatoires.

En effet, tant que le terminal 1 respecte ledit usage prédéterminé, il n'y a aucune différence de fonctionnement, à part une vitesse plus rapide et une consommation moindre.

### Procédé

Selon un troisième aspect de l'invention, est proposé un procédé de préparation d'une carte d'identification d'abonné 3 selon le premier aspect de l'invention, i.e. pour un terminal mobile 2 destiné à un usage prédéterminé, tel qu'un usage M2M minimal (limité à l'échange de paquets de données).

Le présent procédé propose de modifier une carte d'identification d'abonné 3 traditionnelle « d'origine », i.e. comprenant une unité de traitement de donnée mettant en œuvre une application de type SIM/USIM « normale » et une unité de stockage de données.

Par « normale » on entend que l'application de type SIM/USIM respecte pleinement le standard 3GPP, et présente les services SIM/USIM nominaux, ainsi qu'au moins tous les fichiers EF définis comme obligatoires.

Le présent procédé comprend la désactivation d'au moins un service SIM/USIM de ladite application de type SIM/USIM inutile pour la mise en œuvre dudit usage prédéterminé. En particulier et comme expliqué, il s'agit de la modification d'un fichier EF-SST/EF-UST de sorte à supprimer la référence à ce service.

De façon préférée, le procédé comprenant en outre comme expliqué la limitation ou de la taille ou la suppression d'au moins un fichier dont le stockage sur l'unité de stockage de données de la carte d'identification d'abonné 3 est requis par ladite application de type SIM/USIM.

## Revendications

1. Carte d'identification d'abonné (3) pour un terminal mobile (2) destiné à un usage prédéterminé, la carte d'identification d'abonné (3) comprenant une unité de traitement de donnée mettant en œuvre une application de type SIM/USIM et une unité de stockage de données, la carte d'identification d'abonné (3) étant **caractérisée en ce qu'**elle configurée de sorte à désactiver au moins un service SIM/USIM de ladite application de type SIM/USIM inutile pour la mise en œuvre dudit usage prédéterminé.

2. Carte d'identification d'abonné selon la revendication 1, configurée de sorte à désactiver chaque service SIM/USIM inutile pour la mise en œuvre dudit usage prédéterminé.

3. Carte d'identification d'abonné selon l'une des revendications 1 et 2, comprenant dans l'unité de stockage de données au moins un fichier EF-SST de services SIM activés et/ou un fichier EF-UST de services USIM activés, chaque service SIM/USIM désactivé étant indiqué comme indisponible dans ledit fichier EF-SST/EF-UST.

4. Carte d'identification d'abonné selon la revendication 3, dans lequel l'application est de type USIM, chaque service listé dans le fichier EF-SST est désactivé, et seuls les services n°27, n°33 et n°38 listés dans le fichier EF-UST ne sont pas désactivés.

5. Carte d'identification d'abonné selon l'une des revendications 1 à 4, dans lequel au moins un fichier dont le stockage sur l'unité de stockage de données de la carte d'identification d'abonné (3) est requis par l'application SIM/USIM, présente une taille réduite.

6. Carte d'identification d'abonné selon l'une des revendications 1 à 5, dans lequel au moins un fichier dont le stockage sur l'unité de stockage de données de la carte d'identification d'abonné (3) est requis par l'application de type SIM/USIM, est supprimé.

7. Carte d'identification d'abonné selon l'une des revendications 5 et 6, dans lequel ledit fichier présentant une taille réduite ou supprimé est requis pour un service SIM/USIM désactivé et/ou est inutile pour la mise en œuvre dudit usage prédéterminé.

8. Carte d'identification d'abonné selon la revendication 7, dans lequel chaque fichier inutile pour la mise en œuvre dudit usage prédéterminé est supprimé.

9. Carte d'identification d'abonné selon la revendication 8, dans laquelle :
- Soit l'application est de type SIM et sont gardés les seuls fichiers suivants :
∘ Dans un répertoire MF : EF-ICCID ;
∘ Dans un répertoire DF-GSM : EF-IMSI, EF-Kc, EF-HPPLMN, EF-SST, EF-KcGPRS, EF-LOCIGPRS, EF-BCCH, EF-ACC, EF-FPLMN, EF-LOCI, EF-AD, EF-PHASE;
∘ Dans un répertoire DF-GSM-ACCESS : EF-Kc et EF-KcGPRS ;
- Soit l'application est de type USIM et sont gardés les seuls fichiers suivants :
∘ Dans un répertoire MF : EF-DIR, EF-ARR, EF-ICCID ;
∘ Dans un répertoire DF-TELECOM : EF-ARR ;
∘ Dans un répertoire ADF-USIM : EF-ARR, EF-IMSI, EF-Keys, EF-KeysPS, EF-HPPLMN, EF-UST, EF-START-HFN, EF-THRESHOLD, EF-LOCI, EF-PSLOCI, EF-ACC, EF-FPLMN, EF-AD, EF-NETPAR;
∘ Dans un répertoire DF-GSM-ACCESS : EF-Kc et EF-KcGPRS.

10. Carte d'identification d'abonné selon l'une des revendications 1 à 9, étant de type Universal Integrated Circuit Card, UICC.

11. Carte d'identification d'abonné selon l'une des revendications 1 à 10, dans lequel ladite application de type SIM/USIM est soit l'application SIM telle que définie par la spécification ETSI TS 102.221, soit l'application USIM telle que définie par la spécification 3GPP TS 31.102.

12. Carte d'identification d'abonné selon l'une des revendications 1 à 11, dans lequel ledit usage prédéterminé est un usage Machine-To-Machine limité à l'échange de paquets de données.

13. Ensemble d'un terminal mobile (1) destiné à un usage prédéterminé et d'une carte d'identification d'abonné (3) pour le terminal mobile (2) selon l'une des revendications 1 à 12.

14. Procédé de préparation d'une carte d'identification d'abonné (3) pour un terminal mobile (2) destiné à un usage prédéterminé, la carte d'identification d'abonné (3) comprenant une unité de traitement de donnée mettant en œuvre une application de type SIM/USIM et une unité de stockage de données, le procédé étant **caractérisé en ce qu'**il comprend la désactivation d'au moins un service SIM/USIM de ladite application de type SIM/USIM inutile pour la mise en œuvre dudit usage prédéterminé.

15. Procédé selon la revendication 14, comprenant en outre la limitation ou de la taille ou la suppression d'au moins un fichier dont le stockage sur l'unité de stockage de données de la carte d'identification d'abonné (3) est requis par ladite application de type SIM/USIM.
